# EUROPÄISCHE PATENTANMELDUNG

(11) **EP 2 827 224 A1**
(43) Veröffentlichungstag der Anmeldung: **21.01.2015**
(21) Anmeldenummer: 14176087.6
(22) Anmeldetag: 08.07.2014
(51) Int. Cl.: G06F 3/01

(54) **Verfahren und Vorrichtung zur haptischen Interaktion mit visualisierten Daten**

(30) Priorität: 18.07.2013 DE 102013214148
(71) Anmelder: Technische Universität Dresden, 01069 Dresden (DE)
(72) Erfinder: Richter, Andreas, Prof. Dr., 01219 Dresden (DE); Velichkovsky, Boris, Prof. Dr., 01069 Dresden (DE); Pannasch, Sebastian, Dr., 01099 Dresden (DE); Helmert, Jens, Dr., 01097 Dresden (DE); Paschew, Georgi, 01097 Dresden (DE)
(74) Vertreter: Kailuweit & Uhlemann Patentanwälte Partnerschaft mbB

(57) **Zusammenfassung**

Die Erfindung betrifft ein System und ein Verfahren zur haptischen Interaktion mit visualisierten Objekten. Dabei werden dreidimensionale Daten des Anwenders und eine Objektes erfasst und in einem visuellen Subsystem dargestellt. Gleichzeit erfolgt eine Interkation des Anwenders mit einem haptischen Element in einem haptischen Subsystem, wobei das haptische Element so ausgebildet ist, dass es die Oberflächeneigenschaften des Objektes im Kollisionsbereich von Hand und Objekt nachahmen kann.

## Beschreibung

Die Erfindung betrifft ein Verfahren und Vorrichtung zur haptischen Interaktion mit visualisierten Daten

### Stand der Technik

Im Bereich der Kommunikations- und Informationstechnik findet derzeit ein erheblicher technologischer Umbruch statt. Smartphones und Tablet-Computer weisen eine enorme Leistungsfähigkeit bei einer immer kompakteren Bauweise auf. Beides wird nicht zuletzt durch die eingesetzten Displays ermöglicht. Diese sind multifunktionelle Komponenten, welche sowohl als visuelle Ausgabegeräte als auch als berührungsempfindliche Eingabegeräte fungieren. Zudem geben sie häufig auf Eingabevorgänge ein visuell-auditives oder taktiles, vibrationsbasiertes Feedback.

Ein wesentlicher Mangel der rasant wachsenden Informations- und Interaktionstechnologien ist die Beschränkung der Kommunikation zwischen Mensch und Maschine auf auditive und visuelle Kanäle. Zwar lassen sich mittlerweile komplexe audio-visuelle 3D-Eindrücke vermitteln, eine realitätsnahe Darstellung fühlbarer Objekte ist jedoch bislang nicht möglich.

Als haptische Wahrnehmung bezeichnet man das aktive Erfühlen von Größe, Konturen, Oberflächentextur, Gewicht usw. eines Objekts durch Integration aller Hautsinne und der Tiefensensibilität. Die Gesamtheit der haptischen Wahrnehmungen erlaubt es dem Gehirn, mechanische Reize, Temperaturreize und Schmerz zu lokalisieren und zu bewerten. Die Sinne der haptischen Wahrnehmung beim Menschen sind: taktile Wahrnehmung (Bestandteil der Oberflächensensibilität), kinästhetische Wahrnehmung/Propriozeption (Tiefensensibilität), Temperaturwahrnehmung (Thermozeption) und Schmerzwahrnehmung (Nozizeption).

Technologien zur Simulation der Realität, wie beispielsweise virtuelle (*virtual reality,* VR) und erweiterte Realitäten *(augmented reality,* AR), bieten ungeahnte Möglichkeiten, die menschliche Wahrnehmung zu erweitern. Für eine realistische Wahrnehmung der VR/AR-Welten sollten alle Sinne angeregt werden. Aktuelle Systeme ermöglichen in unterschiedlichem Maße die Stimulation von Sehen, Hören und Fühlen. Um visuelle Realitätsnähe zu erlangen, sind dreidimensionale und qualitativ hochwertige Visualisierungen notwendig; durch zusätzliche Präsentation dreidimensionaler akustischer Informationen kann die Realitätsnähe erheblich gesteigert werden.

Für eine physikalische Interaktion mit der virtuellen Welt ist jedoch der Tastsinn unverzichtbar. Er spielt beim Menschen sowohl bei der Nahfelderkennung von Gegenständen innerhalb seiner Greifweite als auch bei der Manipulation von Objekten eine maßgebliche Rolle. Systeme, die alle notwendigen Eindrücke perfekt vermitteln, gibt es heute noch nicht. Während die Integration dreidimensionaler akustischer Eindrücke in eine gegebene virtuelle Umgebung technisch mit vergleichsweise geringem Aufwand realisierbar ist, stellen visuelle und besonders taktile Informationen sowie deren Abstimmung auf menschliche Wahrnehmungsgewohnheiten erhebliche Herausforderungen dar.

Bedeutende Aktivitäten gibt es auf dem Gebiet dreidimensionaler Visualisierungen. Die technische Herausforderung besteht vor allem in der Erfüllung des Anspruchs hoher Realitätstreue bei gleichzeitiger Echtzeitfähigkeit. Derzeitige Entwicklungen auf diesem Gebiet beschäftigen sich hauptsächlich mit Möglichkeiten der effizienten Verarbeitung großer Datenmengen, Prinzipien zur Darstellung virtueller Informationen und deren echtzeitfähiger Visualisierung.

Deutlich differenzierter ist der Entwicklungsstand bei Systemen, welchen den Tastsinn bedienen. Hier kann man grundsätzlich zwei Typen unterscheiden.

Kinästhetische Displays vermitteln dem Nutzer realitätsnahe Eindrücke zur Manipulation von virtuellen Objekten, indem sie mit ihren Effektoren dynamische mechanische Wirkungen auf den Menschen ausüben. Damit stimulieren sie die kinästhetischen Sensoren des Menschen, die Eindrücke über den inneren Zustand eines Körperteils durch Gelenkwinkel und Muskelanspannung vermitteln. Durch Vibrationen des kinästhetischen Displays ist es zudem möglich, Dynamik erlebbar zu machen. Es gibt drei Ausführungsformen kinästhetischer Displays: aktive Joysticks, Force Feedback-Displays (FFD, meist Hand) sowie Displacement-Feedback-Displays (DFD), die größere Körperteile, z. B. den Arm, in das Displaysystem einbeziehen. In diesem Bereich existieren bereits mehrere kommerzialisierte Produkte, die auch mit visuellen 3D-Systemen gekoppelt sein können. Kinästhetische Displays sind Regelkreise, d.h., der Mensch soll über diese Systeme auch einen Einfluss auf die virtuelle Welt nehmen können. Kinästhetische Displays sind jedoch dadurch gekennzeichnet, dass der Anwender immer über ein zusätzliches Hilfselement mit dem virtuellen Objekt interagiert. Dies kann ein aktiver Joystick sein, der als mit der Hand bedienbares Werkzeug fungiert, ein aktiver Handschuh beim Force-Feddback-Display, in dem die Nutzerhand steckt, oder beim Displacement-Feddback ein aktives Gesamteffektorsystem, in welchem sich der gesamte Arm des Nutzers befindet.

So offenbart Handels (Handels, H.: Medizinische Bildverarbeitung. 2. Aufl. Vieweg + Teubner, 2009, S. 334-344, ISBN 978-3-8351-0077-0) verschiedene haptische Elemente, welche als haptische Ein- und Ausgabegeräte ausgebildet sind. Diese geben dem Anwender eine Kraft-Rückkopplung, sodass ein haptischer Eindruck des virtuellen Objekts beim Anwender entsteht. Genannt werden hierbei u.a. Stift und Joystick als werkzeugbasierte haptische Kraftrückkopplungsgeräte.

Weiterhin beschreibt Stone (Stone, R. J., Haptic feedback: A brief history from telepresence to virtual reality. In: Haptic Human-Computer Interaction. S. 1-16, Springer Berlin Heidelberg, 2001) haptische Feedbacksysteme, wie Handschuh-, Stift- oder Joystick-basierte Systeme.

Auch die US 6,704,694 B1 offenbart ein Stift-basiertes haptisches Interface-System.

Daneben sind auch kutane oder taktile Displays bekannt. Diese erlauben es dem Menschen, die virtuelle Welt mit seinem Tastsinn zu erkunden, indem er die Oberflächen virtueller Objekte mit seinen bloßen Händen befühlen kann. Bis vor kurzem war man weit davon entfernt, realistische Impressionen zu den Oberflächeneigenschaften eines virtuellen Objektes vermitteln zu können. Prinzipiell gibt es drei Typen taktiler Displays. Elektrotaktile Displays reizen per elektrischer Stimulation die Haut; eine Methode, an die sich nur wenige Menschen gewöhnen können. Vibrotaktile Displays vermitteln dem Menschen durch Frequenz und Amplitude der Vibration einer Oberfläche Impressionen zur Textur und teilweise zur Nachgiebigkeit von Oberflächen. Konturen und Profile lassen sich allerdings nur mit geringer Präzision darstellen, da das vibrotaktile Prinzip eine mangelnde Ortsauflösung besitzt. Dieses Prinzip ist für 60-80% der Nutzer geeignet. Ideal, weil durch die hohe Realitätsnähe für alle Nutzer zugänglich, sind statische bzw. Displacement-Displays, da diese Systeme Oberflächen physikalisch real nachbilden. Bislang gab es aber keine physikalischen und technischen Möglichkeiten, statische taktile Displays mit genügend hoher Ortsauflösung und mit der notwendigen Multimodalität zu realisieren, um z. B. Texturen, Konturen, Reliefs und die Weichheit einer Oberfläche darzustellen.

So offenbart die WO 2009/061572 A1 ein thermisches haptisches Element, welches ausgebildet ist, um die thermischen Eigenschaften einzelner Zellen des haptischen Elements zu verändern. Dadurch kann dem Anwender ein thermischer Eindruck eines virtuellen Objekts vermittelt werden. Jedoch eignet sich das haptische Element nicht zur gezielten Manipulation des virtuellen Objekts.

Auch die US 2003/0227374 A1 beschreibt ein modulares elektrotaktiles System, bei dem taktile Stimuli der Haut des Anwenders erfolgen.

Die DE 10 2006 036 867 A1 offenbart eine wiederbeschreibbare Einrichtung zur Anzeige taktiler und/oder visueller Informationen, welche durch Einwirkung von mindestens einer in ihrer örtlichen Wirkung steuerbaren physikalischen Größe mindestens eine Funktionsschicht aus einem Funktionsmaterial (1, 1a-1f) lokal in ihren optischen, Aggregatzustands-, Vernetzungs- und/oder Quellungs-Eigenschaften verändert wird, wobei die Funktionsschicht diesen Zustand bis zum erneuten Einwirken einer physikalischen Größe beibehalten kann. Die Funktionsschicht kann dabei beispielweise aus Hydrogel-Elementen gebildet werden. Die monolithische Integration der Hydrogelfunktionsschicht erlaubt es, hoch aufgelöste taktile Displays zu realisieren. In Adv. Mater. 21 (2009), S. 979-983 wird ein derartiges Display mit insgesamt 60x72 (4320) Aktorpixeln, den sogenannten Texeln) bei einer Integrationsdichte von 297 Elementen pro cm² geschildert.

Die vorgenannten Systeme sind jedoch derart ausgestaltet, dass dem Anwender entweder eine direkte haptische Interaktion ohne Einsatz werkzeugbasierter haptischer Kraftrückkopplungssysteme mit dem virtuellen Objekt oder eine reale Gesamtwahrnehmung des virtuellen Objekts als Perzept nicht möglich ist

Als Perzept bezeichnet man dabei in der Psychologie ein Wahrnehmungserlebnis, also das subjektiv erfahrene, erlebte, bewusste (phänomenale) Resultat eines Wahrnehmungsprozesses. Dabei werden vom Gehirn visuelle und kinästhetische Eindrücke zu einem Gesamterlebnis verbunden, welches vom Gehirn als real interpretiert wird.

Aufgabe der Erfindung ist es daher, ein System zur Verfügung zu stellen, welches die Nachteile im Stand der Technik überwindet und ein System zur Verfügung stellt, mit dem einem Nutzer das Perzept vermittelt wird, ein virtuelles Objekt, welches er dreidimensional visuell wahrnimmt auch durch direkte haptische Interaktion mit zumindest einem Körperteil des Anwenders erkunden zu können, ohne hierzu werkzeugbasierte haptische Elemente verwenden zu müssen.

Die Aufgabe wird durch ein System gemäß Anspruch 1 gelöst. Vorteilhafte Ausgestaltungen sind in den abhängigen Ansprüchen angegeben.

Erfindungsgemäß wird ein System zur haptischen Interaktion mit visualisierten Daten bereitgestellt, umfassend:
- zumindest eine erste Vorrichtung zur Erfassung von dreidimensionalen Daten eines Objektes,
- zumindest eine zweite Vorrichtung zur Erfassung von dreidimensionalen Daten eines Anwenders,
- zumindest eine Datenverarbeitungseinrichtung zur Verarbeitung der erfassten dreidimensionalen Daten des Objektes und des Anwenders und zur Generation einer visuellen Darstellung der dreidimensionalen Daten,
- zumindest ein visuelles Subsystem mit einer Anzeigeeinrichtung zur visuellen Darstellung der dreidimensionalen Daten,
- zumindest taktiles Subsystem mit einem haptischen Element zur Interaktion mit dem Anwender, wobei das haptische Element als zumindest ein taktiles Display, vibrotaktiles Display allein oder auch in Kombination mit einem statischen Display ausgebildet ist und
- wobei das visuelle Subsystem oberhalb des taktilen Subsystems angeordnet ist, wobei der Abstand zwischen dem visuellen und dem taktilen Subsystem 50 cm > x > 15 cm, bevorzugt 40 cm > x > 20 cm, besonders bevorzugt 35 cm > x > 25 cm beträgt.

Erfindungsgemäß werden die dreidimensionalen Daten eines Objektes, wie etwa eines Patienten, mittels einer ersten Vorrichtung zur Erfassung von dreidimensionalen Daten erfasst. Die erste Vorrichtung kann dabei beispielsweise eine bildgebende Vorrichtung (MRT, Ultraschall, etc.) sein. Des Weiteren werden die dreidimensionalen Daten eines Anwenders mittels einer zweiten Vorrichtung zur Erfassung von dreidimensionalen Daten des Anwenders erfasst, wobei die zweite Vorrichtung beispielsweise als optischer Sensor ausgebildet ist. Erfindungsgemäß sind das Objekt und der Anwender dabei derart räumlich beanstandet, dass eine direkte Interkation des Anwenders mit dem Objekt nicht erfolgt oder erfolgen kann. Die so erfassten dreidimensionalen Daten des Objektes und des Anwenders werden in einer Datenverarbeitungseinrichtung verarbeitet und eine visuelle Darstellung der verarbeiteten dreidimensionalen Daten des Objektes und des Anwenders generiert. Diese verarbeiteten dreidimensionalen Daten des Objektes und des Anwenders werden in einem visuellen Subsystem mit einer Anzeigeeinrichtung zur visuellen Darstellung der dreidimensionalen Daten dargestellt. Hinsichtlich der Darstellung der dreidimensionalen Daten des Anwenders ist es vorteilhaft, wenn zumindest das mit dem Objekt interagierende Körperteil, z.B. Hand, im visuellen System dargestellt wird. Dabei werden die visualisierten Daten des Anwenders und des Objektes in einem visuellen Subsystem dargestellt, sodass die real räumlich beanstandeten Anwender und Objekt im visuellen System virtuell in räumlicher Nähe dargestellt werden. Der Anwender selbst interagiert jedoch nicht direkt mit dem im visuellen System dargestellten Objekt sondern mit einem haptischen Element in einem taktilen Subsystem.

Die Darstellung der Interaktion des zumindest einen Teils des visualisierten Anwenders mit dem visualisierten Objekt im visuellen Subsystem erfolgt dabei simultan zur Interaktion des Anwenders mit einem haptischen Element in dem taktilen Subsystem, wobei bei Kollision des zumindest einen Teils des visualisierten Anwenders mit dem visualisierten Objekt ein Kollisionspunkt ermittelt wird. Die erfassten dreidimensionalen Daten des Objektes im Kollisionspunkt des zumindest einen Teils des visualisierten Anwenders mit dem visualisierten Objekt werden im taktilen Subsystem abgebildet, wobei das haptische Element eine Oberfläche mit einer Strukturierung aufweist, die derart ausgebildet ist, dass dieses die dreidimensionalen Struktur des Objektes im Kollisionspunkt basierend auf den erfassten dreidimensionalen Daten des Objektes zumindest im Bereich des Kollisionspunktes abbildet.

Das haptische Element ist erfindungsgemäß als zumindest ein taktiles Display oder vibrotaktiles Displays oder auch als Kombination eines taktilen oder vibrotaktilen Displays mit einem statischen Display ausgebildet.

Erfindungswesentlich ist jedoch, dass das visuelle Subsystem separat oberhalb des taktilen Subsystems angeordnet ist, wobei der Abstand zwischen dem visuellen und dem taktilen Subsystem 50 cm > x > 15 cm, bevorzugt 40 cm > x > 20 cm, besonders bevorzugt 35 cm > x > 25 cm beträgt. Nur durch die geeignete räumliche Beabstandung des visuellen Subsystems oberhalb des taktilen Subsystems ist die Bildung eines Perzepts möglich, da nur innerhalb dieser Grenzen die im taktilen Subsystem aufgenommenen haptischen Informationen mit denen im visuellen Subsystem dargestellten virtuellen Informationen zu einem Gesamtperzept verbunden werden können, welches vom Gehirn des Anwenders nachfolgend als real interpretiert werden kann. Eine Abweichung dieser Grenzen der Beabstandung führt im Ergebnis dazu, dass der Gesamteindruck als uneinheitlich und mithin nicht als real wahrgenommen wird. Die in der Folge durch das taktile Subsystem abgebildeten haptischen Informationen zu dem im visuellen Subsystem dargestellten Objekt werden dadurch vom Anwender als nicht real angenommen und verlieren damit wesentlich an Informationsgehalt.

Mit dem erfindungsgemäßen System oder auch Einrichtung ist es somit möglich, Objekte fühlbar zu gestalten, welche normalerweise nicht oder nur schwer zugänglich sind. Beispielsweise kann somit eine Anamnese von inneren Organen erfolgen ohne dass hierzu eine lokale Eröffnung des Patienten notwendig wäre. Zudem könnten Ferndiagnosen an nicht transportfähigen Patienten durch Fachärzte vorgenommen werden. Gleichfalls kann dadurch eine globale Behandlung von komplizierten Fällen durch ausgewiesene Spezialisten erfolgen.

Es ist aber auch denkbar, dieses System zur Beurteilung von Materialien oder einzelnen Bauteilen zu verwenden. Weitere Applikationen sind im Sport, Freizeit und Unterhaltungsbereich denkbar, wo eine haptische Interkation mit einem visualisierten Objekt wünschenswert erscheint.

Es ist bekannt, dass der Mensch im intermodalen (gleichzeitig visuell und taktil) Wahrnehmungsraum kognitiv am leistungsfähigsten ist. Seine Wahrnehmungsmöglichkeiten und -grenzen werden mit Mitteln der angewandten Kognitionsforschung aber auch für die separaten Informationskanäle untersucht. Ein besonderes Gewicht besitzt der taktile Informationskanal, bei dem die menschliche Befähigung zum Fühlen von Reliefs, Kanten, Texturen und Weichheitsunterschieden mit Strukturen, die prinzipiell im Rahmen der Darstellungsmöglichkeiten des taktilen Displays liegen.

In einer ersten Ausführungsform der Erfindung ist die erste und/oder zweite Vorrichtung zur Erfassung der dreidimensionalen Daten als nichtinvasive bildgebende Vorrichtung ausgebildet. Die Qualität der vom intermodalen 3D-Perzept-System, welches verschiedentlich auch als 4D-Display bezeichnet wird, dargestellten Information wird beispielsweise im klinischen Bereich nicht nur durch dessen Leistungsfähigkeit, sondern auch durch die Leistungsfähigkeit der bildgebenden Diagnostik bestimmt, welche die Rohdaten ermittelt. Dabei ist es auch denkbar mehrere der bildgebenden Verfahren zu kombinieren. Beispielsweise sind im Magnetresonanztomographie-Bereich Hybridverfahren interessant, welche die Ergebnisse anderer Diagnoseverfahren in den intermodalen Informationsraum einbeziehen. So lassen sich z. B. Aussagen über die Aktivität der interessierenden Gehirnareale integrieren, welche mittels funktioneller Magnetresonanztomographie (fMRT) oder der Elektroenzephalografie (EEG) ermittelbar sind, während Aussagen über ihre Nervenfaser-Verbindungen aus Diffusionsuntersuchungen gewonnen werden können.

In einer weiteren Ausführungsform der Erfindung ist die erste und/oder zweite Vorrichtung zur Erfassung der dreidimensionalen Daten ausgewählt aus einer Gruppe bestehend aus optischen Sensoren im IR-, VIS und UV-Bereich, CCD-Kameras, CMOS-Sensoren, Impedanzmessung, Sonographie, Magnetresonanztomographie, Szintigraphie, Positronen-Emissions-Tomographie, Single-Photon-Emissionscomputertomographie, Thermographie, Computertomographie, digitale Volumentomographie, Endoskopie oder optische Tomographie. Die Magnetresonanztomographie und Sonographie ermitteln neben den räumlichen Anordnungen auch Materialinformationen. So liefert die Sonografie im B-Mode Informationen zu anatomischen Details, im Doppler-Verfahren zu vaskulären Flüssen und mit dem Acoustic Radiation Force Impuls Imaging (ARFI) zu den mechanischen Gewebeeigenschaften. Vorteilhafterweise erlaubt das vorliegende System dem Anwender eine simultane Bereitstellung dieser Informationsdimensionen. Dies geschieht in einer Form, bei welcher er seine natürliche Nahfeldrekognitionsmethode, den kombinierten Seh-Tastvorgang, nutzen kann, so dass er die Informationen sofort und sehr präzise beurteilen kann, eben, als ob das Objekt tatsächlich vor ihm läge. Dabei werden Unterschiede, wie bestimmte Materialeigenschaften im visuellen Raum z. B. durch Falschfarbendarstellungen, Texturen und visuelle Kontraste dargestellt, im taktilen Bereich durch die Härte, Höhe, Texturen, Reliefs, Kanten und taktile Kontrastierungen wiedergegeben. Die zeitlich aufeinander abgestimmten visuellen und haptisch/taktilen Datenkanäle erzeugen dabei bei dem Nutzer die real anmutende Impression, dass das virtuelle Objekt tatsächlich vor ihm läge und durch befühlen mit den Händen erkundbar wäre.

In einer weiteren Ausführungsform der Erfindung weist das haptische Element eine Aktorpixelmatrix aus Aktorpixeln auf. Die Aktorpixel können dabei beispielsweise auf Basis intrinsisch aktiver Polymere ausgebildet sein. Damit können intermodale Displays geschaffen werden, welche aufgrund ihrer hohen Auflösung von derzeit bis zu 625 individuell steuerbaren Aktorpixeln pro cm² und ihrer Multimodalität Oberflächen physikalisch außerordentlich genau nachbilden können, was bislang technisch unmöglich war. Die Modalitäten der Aktorpixel umfassen neben einer optischen Funktionalität die taktilen Parameter Aktorpixelvolumen, -höhe und Weichheit, welche jeweils um fast eine Größenordnung moduliert werden können. Ein Display auf Basis dieser Aktorpixel kann deshalb Impressionen von einer virtuellen Oberfläche bezüglich Konturen, Reliefs, Texturen und Weichheit vermitteln [Adv. Sci. Technol. 82 (2013), 44-49].

In einer weiteren Ausführungsform der Erfindung sind Aktorpixel aus Polymeren ausgebildet, deren Phasenübergangsverhalten durch Umgebungsgrößen beeinflussbar ist. Als Umgebungsgrößen können dabei etwa physikalische Parameter, wie Druck, Temperatur, Beleuchtungsstärke oder chemische Parameter wie pH-Wert, osmotischer Druck,...dienen. Durch diese Umgebungsgrößen wird das Phasenübergangsverhalten der Aktorpixel zumindest im Bereich des Kollisionspunktes des Anwenders mit dem haptischen Element beeinflusst, sodass die Aktorpixel die strukturellen Gegebenheiten des Objektes am haptischen Element abbilden können. Dabei können auch Informationen zur Dichte, Druck, Verformbarkeit und Oberflächengestaltung des Objektes mittels des haptischen Elements dem Anwender zugänglich gemacht werden.

In einer weiteren Ausführungsform der Erfindung sind die Aktorpixel aus Hydrogelen ausgebildet, welche durch den Eintrag elektrischer, chemischer oder thermischer Energie in ihrem Phasenübergangsverhalten beeinflussbar ausgebildet sind. Durch den Eintrag elektrischer, chemischer oder thermischer Energie wird dabei das Phasenübergangsverhalten der Hydrogele derart beeinflusst, dass eine Änderung des Phasenverhaltens erfolgt und somit ein direkte Änderung der mechanischen Eigenschaften des Hydrogels am Aktorpixel. Dadurch können gezielt Informationen hinsichtlich der Beschaffenheit des Objektes zumindest am Kollisionspunkt durch das haptische Element abgebildet werden.

In einer weiteren Ausführungsform der Erfindung umfasst das System weiterhin eine dritte Vorrichtung zur Erfassung von dreidimensionalen Daten eines Anwenders, wobei die dritte Vorrichtung zur Erfassung der Augenbewegung des Anwenders ausgebildet ist. Durch die dritte Vorrichtung erfolgt eine Verfolgung der Augenbewegung (Eye-Tracking), um die Blickrichtung des Anwenders zu bestimmen. Dies ist vorteilhaft, wenn das visuelle Subsystem auch eine Abbildung der näheren Umgebung wiedergeben soll. Dadurch wird das Perzept dahingehend verstärkt, dass der Unterschied zwischen virtueller Darstellung und realer Umgebung weitgehend aufgehoben wird, sodass das Perzept stärker als real interpretiert werden kann. Weiterhin kann durch die Verfolgung der Augenbewegung und der Ermittlung der Blickrichtung die hochauflösende visuelle Darstellung im visuellen Subsystem auf den Bereich beschränkt werden, der als Blickfeld durch den Anwender wahrgenommen wird. Angrenzende Bereiche, die dabei nur partiell oder peripher wahrgenommen werden, können dabei weniger detailliert dargestellt werden, wodurch der Rechenaufwand zur Berechnung der Darstellung verringert werden kann. Die Nutzung eines blickkontingenten Systems auf Basis eines Eye-Trackers bietet zudem dem Nutzer die Möglichkeit, mit den Augen bestimmte Zusatzfunktionen wie Zoom, Objektrotation u. ä. zu betätigen.

In einer weiteren Ausführungsform der Erfindung ist die dritte Vorrichtung ein ortsfestes System ausgewählt aus Pan-Tilt-System, ein Tilting-Mirror-System oder Fixed-Camera-System.

Gegenstand der Erfindung ist auch ein Verfahren zur haptischen Interaktion mit visualisierten Daten umfassend die Schritte:
- Erfassen dreidimensionaler Daten eines Objektes in Echtzeit,
- Erfassen dreidimensionaler Daten eines Anwenders in Echtzeit,
- Erzeugung einer visuellen Echtzeit-Darstellung der dreidimensionalen Daten des Objektes,
- Erzeugung einer visuellen Echtzeit-Darstellung von zumindest einem Körperteil des Anwenders basierend auf den dreidimensionalen Daten des Anwenders,
- Darstellung der dreidimensionalen Daten des Objektes und des zumindest einen Körperteils des Anwenders in einem visuellen Subsystem, wobei die visualisierten dreidimensionalen Daten des Objekts mit den visualisierten dreidimensionalen Daten des Anwenders in einer Anzeigeeinrichtung des visuellen Subsystems dargestellt werden, wobei die Darstellung der Interaktion des zumindest einen Teils des visualisierten Anwenders mit dem visualisierten Objekt im visuellen Subsystem und simultane Interaktion des Anwenders mit einem haptischen Element in einem taktilen Subsystem, wobei bei Kollision des zumindest einen Teils des visualisierten Anwenders mit dem visualisierten Objekt ein Kollisionspunkt ermittelt wird, wobei die Darstellung im visuellen Subsystem in einem Abstand von 50 cm > x > 15 cm, bevorzugt 40 cm > x > 20 cm, besonders bevorzugt 35 cm > x > 25 cm oberhalb des haptischen Subsystems erfolgt und
- die erfassten dreidimensionalen Daten des Objektes im Kollisionspunkt des zumindest einen Teils des visualisierten Anwenders mit dem visualisierten Objekt im taktilen Subsystem abgebildet werden, wobei das haptische Element eine Oberfläche mit einer Strukturierung aufweist, die derart ausgebildet ist, dass dieses die dreidimensionalen

Struktur des Objektes im Kollisionspunkt basierend auf den erfassten dreidimensionalen Daten des Objektes zumindest im Bereich des Kollisionspunktes abbildet.

Dabei ist wichtig, das Softwareframework mit einer Synchronität und Abstimmung zusammenzuführen, die den sehr hohen Qualitätsanforderungen des Systems entsprechen. Verschiedene Teilaufgaben beschäftigen sich dabei mit der Zusammenführung der visualisierten Darstellungen (Renderungen) des Objekts und der Nutzerhände im visuellen Subsystem und der Integration der Kollisionspunktbestimmung.

Erfindungswesentlich ist, dass die Darstellung im visuellen in einem Abstand von 50 cm > x > 15 cm, bevorzugt 40 cm > x > 20 cm, besonders bevorzugt 35 cm > x > 25 cm oberhalb des haptischen Subsystems erfolgt. Nur in diesem Bereich werden die visuellen Informationen des visuellen Subsystems und die haptischen Informationen des taktilen Subsystems zu einem Gesamtperzept verbunden und die so gebildete Wahrnehmung vom Gehirn des Anwenders als real interpretiert.

In einer weiteren Ausführungsform der Erfindung wird
- beim Erfassen der dreidimensionalen Daten des Anwenders die Handbewegung des Anwenders in Echtzeit erfasst,
- basierend auf der erfassten Handbewegung des Anwenders eine visuelle Echtzeit-Darstellung der Handbewegung des Anwenders erzeugt wird,
- die visuelle Echtzeit-Darstellung der Handbewegung im visuellen Subsystem dargestellt wird, wobei die Darstellung der Interaktion der visualisierten Echtzeit-Darstellung der Handbewegung des Anwenders mit dem visualisierten Objekt im visuellen Subsystem erfolgt, sodass die Echtzeit-Darstellung der Handbewegung des Anwenders mit dem visualisierten Objekt interagiert, wobei bei Kollision der visualisierten Echtzeit-Darstellung der Handbewegung des Anwenders mit dem visualisierten Objekt im visuellen Subsystem der Kollisionspunkt berechnet wird und
- zumindest die im Kollisionspunkt erfassten dreidimensionalen Daten des Objekts im taktilen Subsystem abgebildet werden.

Die Echtzeit-Implementierung der Nutzerhand in das visuelle 3D-Subsystem erfordert die Realisierung eines leistungsfähigen Handtracking-Systems, welches die Handstellung und Position erfasst sowie die Hände in real-time simuliert und rendert. Von erheblicher Bedeutung ist darüber hinaus die Kollisionspunktbestimmung. Sie ist einerseits für das Zustandekommen des intermodalen Perzepts beim Menschen wichtig, andererseits bestimmt der Kollisionspunkt auch den Mittelpunkt der Fläche, welche durch die taktile Anzeigeeinheit darzustellen ist, sowie den Neigungswinkel bzw. die Position, die das taktile Display entsprechend zu berührenden Oberfläche in der visuellen Darstellung einnehmen muss.

In einer weiteren Ausführungsform der Erfindung umfasst das Verfahren weiterhin die
- Erfassung der Augenbewegung des Anwenders
- Verarbeitung der erfassten Daten der Augenbewegung und Bestimmung eines aktiven Blickfeldes des Anwenders
- Implementierung der erfassten Daten der Augenbewegung und des aktiven Blickfelds in das visuelle Subsystem, wobei die erfassten Daten der Augenbewegung des Anwenders eine lokale Anpassung der visuellen Darstellung des Objektes sowie der visuellen Darstellung der Handbewegung im Bereich des aktiven Blickfelds.

Die Nutzung eines blickkontingenten Systems auf Basis eines Eye-Trackers bietet dem Nutzer die Möglichkeit, mit den Augen bestimmte Zusatzfunktionen wie Zoom, Objektrotation u. ä. zu betätigen.

Mit der vorliegenden Erfindung ist es erstmals möglich, dem Anwender, beispielsweise einem Mediziner, die Information im intermodalen (visuell-taktilen) Informationsraum darzustellen. Dies bedeutet, dass er das Empfinden hat, dass das tatsächlich selbstverständlich im Patienten befindliche Organ gegenständlich direkt vor ihm liegt, denn er kann es real dreidimensional besehen und mit seinen bloßen Händen befühlen.

Die dafür benötigten Daten stellt die moderne nichtinvasive, bildgebende Diagnostik (Magnetresonanztomografie, Computertomografie, Sonografie) bereit. Nutzt man deren Leistungsfähigkeit vollständig aus, so liefert sie neben Informationen zu Anatomien und vaskulären Flüssen auch quantitative Angaben über die mechanischen Eigenschaften des Gewebes. Der Arzt kann die gewonnenen Daten als pathologische Strukturen im Verhältnis zu seinen Nachbarorganen so beschauen und betasten, als ob der Patient bereits geöffnet wäre. Die Informationsverarbeitung ist zudem in der Lage, beurteilungsrelevante Aspekte besonders hervorzuheben, beispielsweise durch Kontrastverstärkung sowie interessierende Details durch Vergrößern (Zoom) in weit höherer als natürlicher Präzision darzustellen. Die Methodiken der Diagnose, Operationsplanung und -durchführung vereinfachen sich durch diese Möglichkeiten grundlegend.

Im Bereich Screening und Diagnostik ergeben sich eine ganze Reihe neuer Funktionen und Methoden. Das erfindungsgemäße System bietet beispielsweise enorme Stärken für die Beurteilung des Verhältnisses der pathologischen Struktur zu seinen Nachbarorganen. Dies würde z. B. die Dignitätsbeurteilung von Tumoren, z. B. Tumoren der Mamma, entscheidend vereinfachen und deutlich zuverlässiger gestalten.

Das erfindungsgemäße System kann in den nachfolgenden Bereichen Verwendung verwendet werden: in der klinischen bildgebenden Diagnostik, im Fahrzeug- und Maschinenbau, zur Materialprüfung und im Bereich Freizeit, Sport, Unterhaltung sowie Shopping.

Die vorbenannten erfindungsgemäßen Ausführungsformen sind geeignet, die Aufgabe zu lösen. Dabei sind auch Kombinationen der offenbarten Ausführungsformen zur Lösung der Aufgabe geeignet. Bevorzugte Weiterbildungen der Erfindung ergeben sich aus den Kombinationen der Ansprüche oder einzelner Merkmale davon.

Nachfolgend soll die Erfindung anhand einiger Ausführungsbeispiele und der zugehörigen Figuren eingehender erläutert werden. Die Ausführungsbeispiele sollen die Erfindung beschreiben, ohne sich auf diese zu beschränken.

Es zeigen die
Fig. 1a und 1b eine schematische Darstellung eines erfindungsgemäßen Systems und
Fig. 2 eine schematische Darstellung des Ablauf des erfindungsgemäßen Verfahrens.

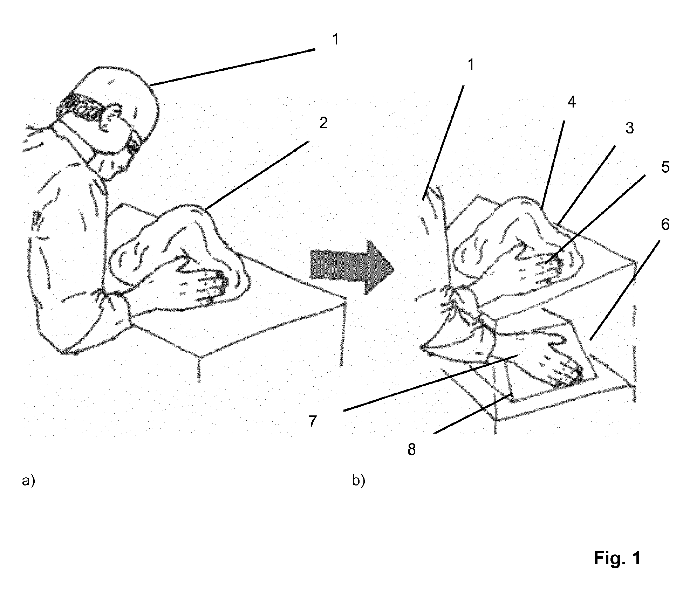

In einem ersten Ausführungsbeispiel ist in Fig. 1 das Funktionsprinzip des erfindungsgemäßen Systems (intermodales 3D-Perzept-System) verdeutlicht. Dabei zeigt die Fig. 1a die Interaktion eines Anwenders 1 mit einem virtuellen, 3D-perzeptiven Objekt 2. Das dabei dargestellte Objekt 2 wird durch das in Fig. 1b dargestellte visuelle Subsystem 3 erzeugt. Im visuellen Subsystem **3** wird das interessierende Objekt als dreidimensional visualisiertes Objekt **4** dargestellt. Auch die Hand des Anwender **1** ist im visuellen Subsystem **3** als visuelles Abbild **5** wiedergegeben. In einer nur leicht versetzten Ebene befindet sich das taktile Subsystem **6,** welche Impressionen zur Oberfläche des Objektbildes im Handberührungs- bzw. Kollisionsbereich vermitteln. Das visuelle Subsystem **3** ist dabei oberhalb des taktilen Subsystems **6** angeordnet, wobei der Abstand zwischen dem visuellen und dem taktilen Subsystem **3,6** 50 cm > x > 15 cm, bevorzugt 40 cm > x > 20 cm, besonders bevorzugt 35 cm > x > 25 cm beträgt. Innerhalb des taktilen Subsystems **6** agiert die reale Hand des Anwenders **7** mit einem haptische Element **8,** welches so ausgebildet ist, dass es die taktilen Eigenschaften des Objekts **2** im Kollisionsbereich nachahmen kann. Als haptisches Element **8** kann dabei beispielsweise ein taktiles oder vibrotaktiles Display verwendet werden. Alternativ kann ein Aktorpixel-basiertes Display Verwendung finden. Da der Nutzer jedoch nicht seine realen Hände **7** sieht, sondern deren Echtzeitnachbildungen **5,** welche im visuellen Subsystem **3** dargestellt sind, verbindet seine kognitive Wahrnehmung die visuellen und taktilen Eindrücke zu einem einheitlichen Perzept, so dass er das Objekt **2** als real sicht- und anfassbar erlebt.

Das System besteht dabei aus zwei Subsystemen. A) Visuelles Subsystem **3:** visualisiert in dreidimensionaler Weise das beispielsweise mit bildgebenden Verfahren erfasste Objekt **2,** z. B. ein Organ. In diese visuelle Darstellung des Objektes **4** werden in Echtzeit die visualisierten Hände **5** des Anwenders hineinprojiziert, so dass er diese im direkten räumlichen Bezug zum Objekt **2** wahrnimmt. B) Taktiles Subsystem **6:** Im Moment der Kollision von visualisierter Hand **5** und visualisierten Objekt **4** im visuellen Bild berührt der Anwender **1** im nur einige Zentimeter unterhalb des visuellen Subsystems **3** gelegenen taktilen Subsystem **5,** welches für ihn nicht sichtbar ist, mit seiner realen Hand **7** die Oberfläche des haptischen Elements **8.** Dieses zeigt die Oberflächengegebenheiten des Objekts **2** am Kollisionspunkt an, welche ebenfalls durch die bildgebenden Verfahren ermittelt sind. Das haptische Element **8** wird entsprechend der Oberflächenorientierung am Kollisionspunkt ausgerichtet. Der Anwender erlebt das visualisierte Objekt **4** so, als ob es dinglich als reales Objekt **2** vor ihm läge. Das haptische Element **8** kann dabei etwa eine Oberfläche aus einzeln ansteuerbaren Aktorpixeln aufweisen, welche eine Modulation der Festigkeit und des Volumen erlauben, wodurch diese die Eigenschaften des Objekts **2** im Kollisionspunkt nachbilden können.

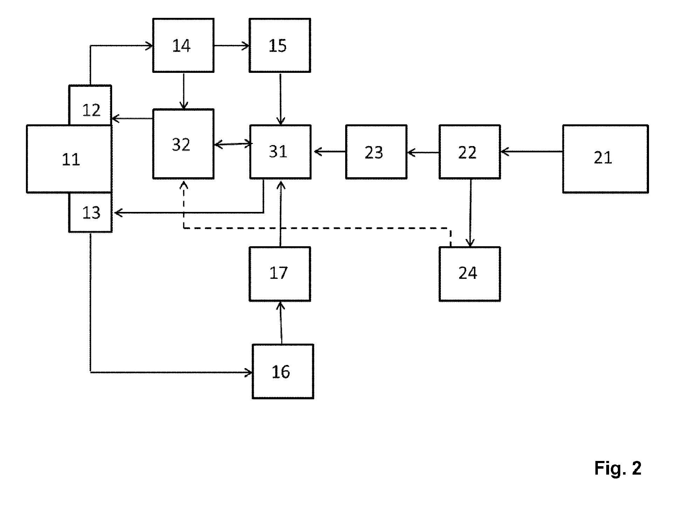

In einem weiteren Ausführungsbeispiel ist in Fig. 2 der Verfahrensablauf zur haptischen Interkation mit dem visualisierten Objekt dargestellt.

Dabei wird die Bewegung der Hände **12** und Augen **13** des Anwenders **11** durch entsprechende Verfahren erfasst. Die Handbewegung kann beispielsweise über optisch Verfahren mit mehreren Kameras erfasst werden (Handtracking). Die so erfassten Daten der Handbewegung werden in einer nicht näher dargestellten Datenverarbeitungsvorrichtung berechnet **14** und eine Visualisierung der Handbewegung **15** erzeugt. Zugleich wird die Augenbewegung durch geeignete Verfahren erfasst (Eye Tracking) **16** und eine Blickfeldberechnung durchgeführt. Auf Basis der bei der Erfassung der Augenbewegung **16** erhaltenen Daten kann somit die Blickrichtung des Anwenders **11** berechnet werden.

Weiterhin werden durch geeignete, vorzugsweise bildgebende Verfahren die dreidimensionalen Daten und Materialeigenschaften eines Objekts **21** erfasst **(22).** Auf Basis der erfassten Daten **22** erfolgt eine Berechnung zur Visualisierung des Objekts **21.** Das erzeugte visualisierte Objekt **23** wird nunmehr in einem visuellen Subsystem **31** mit der visualisierten Darstellung der Handbewegung **15** kombiniert.

Bei der nachfolgenden Interaktion erfolgt simultan eine Annäherung der visualisierten Hand **15** an das visualisierte Objekt **23** im visuellen Subsystem **31.** Zugleich nähert sich die reale Hand **12** des Anwenders **11** in einem taktilen Subsystem **32** einem haptischen Element an, welches dazu befähigt ist, die Materialeigenschaften des Objekts **21** im Umkreis des Kollisionspunktes der Hand mit dem Objekt nachzubilden. Die Materialeigenschaften des Objekts werden beispielsweise aus den Daten der bildgebenden Verfahren berechnet **(24)** und können dann an das haptische Element im taktilen Subsystem **32** übermittelt werden, wodurch eine genaue Nachahmung der Oberflächeneigenschaften des Objekts **21** möglich ist. Im Ergebnis sieht der Anwender **11** mit seinen Augen **12** die im visuellen Subsystem **31** dargestellte Interkation des visualisierten Objekts **23** mit der visualisierten Hand **15,** zugleich berührt der Anwender mit seinen realen Händen **13** das haptische Element im taktilen Subsystem **32.** Durch die Überlagerung der visuellen Wahrnehmung und der taktilen Informationen erfährt der Anwender **11** eine Wahrnehmung des visualisierten Objekts **23.**

### Bezugszeichenliste

- 1: Anwender
- 2: Objekt
- 3: visuelles Subsystem
- 4: visualisiertes Objekt
- 5: visualisierte Hand des Anwenders
- 6: taktiles Subsystem
- 7: reale Hand des Anwender
- 8: haptisches Element

- 11: Anwender
- 12: Hände des Anwenders
- 13: Augen des Anwenders
- 14: Erfassung der Handbewegung
- 15: Visualisierung der Handbewegung
- 16: Erfassen der Augenbewegung
- 17: Blickfeldbestimmung

- 21: Objekt
- 22: Erfassend es Objekts
- 23: Visualisierung des Objektes
- 24: Berechnung der Materialeigenschaften
- 31: koordinierte Visualisierung von visuellen Objekt und visueller Hand
- 32: taktiles Subsystem

## Patentansprüche

1. System zur haptischen Interaktion mit visualisierten Daten umfassend:
- zumindest eine erste Vorrichtung zur Erfassung von dreidimensionalen Daten eines Objektes,
- zumindest eine zweite Vorrichtung zur Erfassung von dreidimensionalen Daten eines Anwenders,
- zumindest eine Datenverarbeitungseinrichtung zur Verarbeitung der erfassten dreidimensionalen Daten des Objektes und des Anwenders und zur Generation einer visuellen Darstellung der dreidimensionalen Daten,
- zumindest ein visuelles Subsystem mit einer Anzeigeeinrichtung zur visuellen Darstellung der dreidimensionalen Daten,
- zumindest ein taktiles Subsystem mit einem haptischen Element zur Interaktion mit dem Anwender, wobei das haptische Element als zumindest ein taktiles Display, vibrotaktiles Display allein oder auch in Kombination mit einem statischen Display ausgebildet ist und wobei das visuelle Subsystem oberhalb des taktilen Subsystems angeordnet ist und der Abstand zwischen dem visuellen und dem haptischen Subsystem 50 cm > x > 15 cm, bevorzugt 40 cm > x > 20 cm, besonders bevorzugt 35 cm > x > 25 cm beträgt.

2. System nach Anspruch 1, **dadurch gekennzeichnet, dass** die erste und/oder zweite Vorrichtung zur Erfassung der dreidimensionalen Daten als bildgebende Vorrichtung ausgebildet ist.

3. System nach einem der vorhergehenden Ansprüche, **dadurch gekennzeichnet, dass** die erste und/oder zweite Vorrichtung zur Erfassung der dreidimensionalen Daten ausgewählt ist aus einer Gruppe bestehend aus optischen Sensoren im IR-, VIS und UV-Bereich, CCD-Kameras, CMOS-Sensoren, Impedanzmessung, Sonographie, Magnetresonanztomographie, Szintigraphie, Positronen-Emissions-Tomographie, Single-Photon-Emissionscomputertomographie, Thermographie, Computertomographie, digitale Volumentomographie, Endoskopie oder optische Tomographie.

4. System nach einem der vorhergehenden Ansprüche, **dadurch gekennzeichnet, dass** das haptische Element eine Aktorpixelmatrix aus Aktorpixeln aufweist.

5. System nach Anspruch 4, **dadurch gekennzeichnet, dass** die Aktorpixel aus Polymeren ausgebildet sind, deren Phasenübergangsverhalten durch Umgebungsgrößen beeinflussbar sind.

6. System nach Anspruch 5, **dadurch gekennzeichnet, dass** die Aktorpixel aus Hydrogelen ausgebildet sind, welche durch den Eintrag elektrischer, chemischer oder thermischer Energie in ihrem Phasenübergangsverhalten beeinflussbar ausgebildet sind.

7. System nach einem der vorhergehenden Ansprüche weiterhin umfassend eine dritte Vorrichtung zur Erfassung von dreidimensionalen Daten eines Anwenders, wobei die dritte Vorrichtung zur Erfassung der Augenbewegung des Anwenders ausgebildet ist.

8. System nach Anspruch 7, **dadurch gekennzeichnet, dass** die dritte Vorrichtung ein ortsfestes System ausgewählt aus Pan-Tilt-System, ein Tilting-Mirror-System oder Fixed-Camera-System ist.

9. Verfahren zur haptischen Interaktion mit visualisierten Daten umfassend die Schritte:
- Erfassen dreidimensionaler Daten eines Objektes in Echtzeit,
- Erfassen dreidimensionaler Daten eines Anwenders in Echtzeit,
- Erzeugung einer visuellen Echtzeit-Darstellung der dreidimensionalen Daten des Objektes,
- Erzeugung einer visuellen Echtzeit-Darstellung von zumindest einem Körperteil des Anwenders basierend auf den dreidimensionalen Daten des Anwenders,
- Darstellung der dreidimensionalen Daten des Objektes und des zumindest einen Körperteils des Anwenders in einem visuellen Subsystem, wobei die visualisierten dreidimensionalen Daten des Objekts mit den visualisierten dreidimensionalen Daten des Anwenders in einer Anzeigeeinrichtung des visuellen Subsystems dargestellt werden, wobei die Darstellung der Interaktion des zumindest einen Teils des visualisierten Anwenders mit dem visualisierten Objekt im visuellen Subsystem und simultane Interaktion des Anwenders mit einem haptischen Element in einem taktilen Subsystem, wobei bei Kollision des zumindest einen Teils des visualisierten Anwenders mit dem visualisierten Objekt ein Kollisionspunkt ermittelt wird, wobei die Darstellung im visuellen Subsystem in einem Abstand von 50 cm > x > 15 cm, bevorzugt 40 cm > x > 20 cm, besonders bevorzugt 35 cm > x > 25 cm oberhalb des taktilen Subsystems erfolgt und
- die erfassten dreidimensionalen Daten des Objektes im Kollisionspunkt des zumindest einen Teils des visualisierten Anwenders mit dem visualisierten Objekt im taktilen Subsystem abgebildet werden, wobei das haptische Element eine Oberfläche mit einer Strukturierung aufweist, die derart ausgebildet ist, dass dieses die dreidimensionalen Struktur des Objektes im Kollisionspunkt basierend auf den erfassten dreidimensionalen Daten des Objektes zumindest im Bereich des Kollisionspunktes abbildet.

10. Verfahren nach Anspruch 9, **dadurch gekennzeichnet, dass**
- beim Erfassen der dreidimensionalen Daten des Anwenders die Handbewegung des Anwenders in Echtzeit erfasst wird,
- basierend auf der erfassten Handbewegung des Anwenders eine visuelle Echtzeit-Darstellung der Handbewegung des Anwenders erzeugt wird,
- die visuelle Echtzeit-Darstellung der Handbewegung im visuellen Subsystem dargestellt wird, wobei die Darstellung der Interaktion der visualisierten Echtzeit-Darstellung der Handbewegung des Anwenders mit dem visualisierten Objekt im visuellen Subsystem erfolgt, sodass die Echtzeit-Darstellung der Handbewegung des Anwenders mit dem visualisierten Objekt interagiert, wobei bei Kollision der der visualisierten Echtzeit-Darstellung der Handbewegung des Anwenders mit dem visualisierten Objekt im visuellen Subsystem der Kollisionspunkt berechnet wird und
- zumindest die im Kollisionspunkt erfassten dreidimensionalen Daten des Objekts im taktilen Subsystem abgebildet werden.

11. Verfahren nach Anspruch 9 oder 10 weiterhin umfassend
- Erfassung der Augenbewegung des Anwenders
- Verarbeitung der erfassten Daten der Augenbewegung und Bestimmung eines aktiven Blickfeldes des Anwenders
- Implementierung der erfassten Daten der Augenbewegung und des aktiven Blickfelds in das visuelle Subsystem, wobei die erfassten Daten der Augenbewegung des Anwenders eine lokale Anpassung der visuellen Darstellung des Objektes sowie der visuellen Darstellung der Handbewegung im Bereich des aktiven Blickfelds.

12. Verwendung eines Systems nach einem der Ansprüche 1 bis 8 in der medizinischen bildgebenden Diagnostik, im Fahrzeug- und Maschinenbau, zur Materialprüfung und im Bereich Freizeit, Sport, Unterhaltung sowie Shopping.
